# EUROPEAN PATENT APPLICATION

(11) **EP 4 810 837 A1**
(43) Date of publication of application: **23.09.2026**
(21) Application number: 26165340.6
(22) Date of filing: 17.03.2026
(51) Int. Cl.: F16K 11/074, B60H 1/00, F16K 27/04

(54) **MULTI-WAY VALVE ASSEMBLY, THERMAL MANAGEMENT SYSTEM, AND MULTI-WAY VALVE**

(30) Priority: 21.03.2025 CN 202510344141
(71) Applicant: Johnson Electric International AG, 3280 Murten (CH)
(72) Inventor: CHEN, Fangqi, Shenzhen (CN); SUN, Ning, Shenzhen (CN); QU, Tao, Shenzhen (CN); CHEN, Anguo, Shenzhen (CN); TANG, Shanyong, Shenzhen (CN)
(74) Representative: Doherty, William

(57) **Abstract**

A multi-way valve configured to be mounted onto a manifold (15) of an automotive thermal management system. The multi-way valve includes a valve housing (111) and a valve core (113) at least partially disposed within the valve housing (111). The valve core (113) is rotatable relative to the valve housing (111). An axial end of the valve housing (111) is opened to allow the valve core (113) to enter the valve housing (111). The multi-way valve further includes a bayonet connection between the valve housing (111) and the valve core (113) to prevent the valve core (113) from axially exiting the valve housing (111).

## Description

### FIELD OF THE INVENTION

The invention relates to the technical field of valves, in particular to a multi-way valve assembly, a thermal management system and a multi-way valve.

### BACKGROUND

In current market of new energy vehicles, to enhance energy efficiency and extend range, the heat generated by components such as electric motors, batteries, and air conditioning systems is managed uniformly, collectively referred to as the thermal management system. Due to the numerous components requiring heating or cooling and the variety of operational modes, fluid control in the thermal management system is relatively complex, necessitating the use of multi-way valves for fluid regulation.

A multi-way valve assembly includes a multi-way valve mounted to a manifold. The multi-way valve consists of a valve housing and a valve core housed within it, with the manifold abutting the valve housing. This direct contact between the multi-way valve and the manifold enable absence of a valve cover. However, when the manifolds not connected to the valve housing, the valve housing and valve core remain separate. During the assembly process of the multi-way valve assembly, it is necessary to maintain integration of the valve housing and valve core, which increases the complexity of assembly. Therefore, the assembly efficiency is impact and the cost is increased. Additionally, the separated valve housing and valve core also raise transportation cost and reduce stability in transportation.

### SUMMARY OF THE INVENTION

The present invention aims to provide a multi-way valve assembly, a thermal management system, and a multi-way valve, which offer higher assembly efficiency, lower assembly and transportation costs, as well as improved stability during both assembly and transportation.

In one aspect, the present invention provides a multi-way valve configured to be mounted onto a manifold of an automotive thermal management system. The multi-way valve includes a valve housing and a valve core at least partially disposed within the valve housing. The valve core is rotatable relative to the valve housing. An axial end of the valve housing is opened to allow the valve core to enter the valve housing. The multi-way valve further includes a bayonet connection between the valve housing and the valve core to prevent the valve core from axially exiting the valve housing.

Preferably, the valve housing is provided with a first stop feature, and the valve core is provided with a second stop feature, the second stop feature being located on the side of the first stop feature away from the open end of the valve housing, and configured to abut the first stop feature to form the bayonet connection.

Preferably, one of the first stop feature and the second stop feature is a plurality of lugs, and the other is a flange; the flange defines notches configured to allow the lug to pass from one side of the flange to the other side.

Preferably, an end plate is provided at an end of the valve housing away from the open end, and the second stop feature is located axially between the end plate and the first stop feature.

Preferably, the valve core comprises an elastic member, the elastic member applying an axial elastic force to the valve core in a direction away from the end plate of the valve housing.

Preferably, the second stop feature, and the first stop feature axially abuts against each other under an elastic force of the elastic member in response to the valve housing detached from the manifold (15).

Preferably, a static sealing pad is provided within the valve housing, and attached to the end plate; a dynamic sealing pad is attached to an end of the valve core facing the end plate of the valve housing; the elastic member is disposed axially between the valve core and the dynamic sealing pad, and a side of the dynamic sealing pad away from the valve core abuts the static sealing pad.

Preferably, a seal ring is also provided within the valve housing, near the end plate. A rotation shaft extends from an end of the valve core facing the end plate. The rotation shaft extends through the dynamic sealing pad, the seal ring, and the end plate of the valve housing to be engages with an actuator.

Preferably, the elastic member is an annular leaf spring with outer and inner sides of the elastic member respectively provided with a first collar and a second collar, the first collar being sleeved around the elastic member, and the second collar being mounted inside the elastic member and sleeved around the rotation shaft.

In another aspect, the present invention provides a multi-way valve assembly includes the multi-way valves above, an actuator, and a manifold, the actuator is provided at an end of the multi-way valve away from the manifold.

Preferably, the valve core is urged by the manifold toward the end plate of the valve housing so that the second stop feature and the first stop feature are axially spaced apart.

Preferably, the multi-way valve further includes a first sealing gasket and a second sealing gasket, the first sealing gasket being provided between the valve housing and the manifold, and the second sealing gasket being sandwiched between the valve core and the manifold.

In another aspect, the present invention further provides a thermal management system includes the multi-way valve assemblies above.

### BRIEF DESCRIPTION OF THE DRAWINGS

Figure 1 is a perspective structural schematic diagram of an embodiment of the multi-way valve assembly of this application
Figure 2 is a sectional view of the multi-way valve assembly shown in Figure 1.
Figure 3 is an exploded view of the multi-way valve assembly of Figure 1 from one angle.
Figure 4 is an exploded view of the multi-way valve assembly of Figure 3 from another angle.
Figure 5 is a plan view of the valve housing of the multi-way valve assembly shown in Figure 1.
Figure 6 is a plan view of the valve core assembly of the multi-way valve assembly shown in Figure 1.
Figure 7 is an exploded view of the valve housing of the multi-way valve assembly shown in Figure 1.
Figure 8 is a sectional view of the valve housing shown in Figure 7.
Figure 9 is an exploded view of the valve core of the multi-way valve assembly shown in Figure 1 from one angle.
Figure 10 is a sectional view of the valve core shown in Figure 9.

### DETAILED DESCRIPTION OF THE PREFERRED EMBODIMENTS

To facilitate understanding of this application, a more comprehensive description is provided below with reference to the relevant drawings. One or more embodiments of this application are illustrated in the drawings to make the disclosed technical solution clearer and more thorough. It should be understood that this application can be implemented in many different forms and is not limited to the embodiments described below.

In the drawings of this application, identical or similar reference numerals correspond to identical or similar components. In the description of this application, it should be understood that any terms indicating orientation or positional relationships such as "upper," "lower," "left," "right," etc. are based on the orientation or positional relationships shown in the drawings and are only for facilitating description of this application and simplifying the description. They do not indicate or imply that the indicated devices or elements must have a specific orientation, be constructed in a specific orientation, or operate in a specific manner. Therefore, the terms describing positional relationships in the drawings are used only for illustrative purposes and should not be construed as limitations on this patent. A person of ordinary skill in the art can understand the specific meaning of the above terms according to the context.

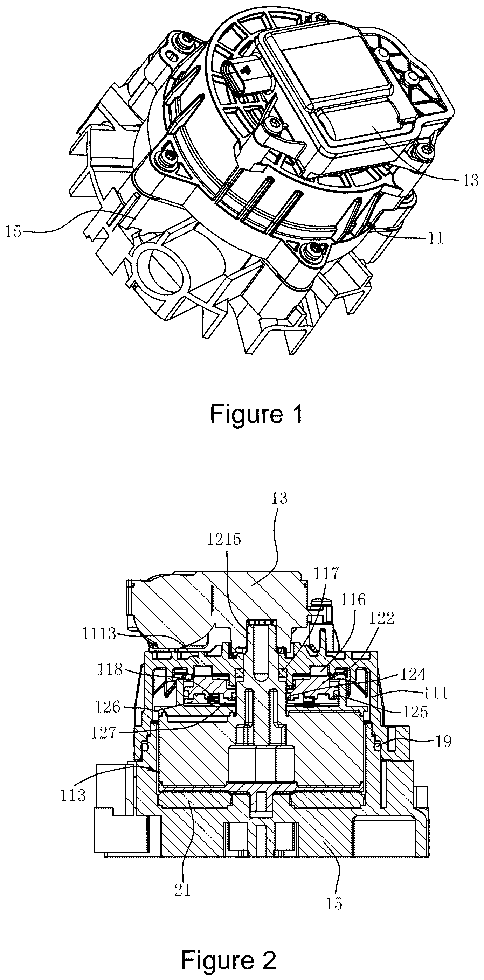

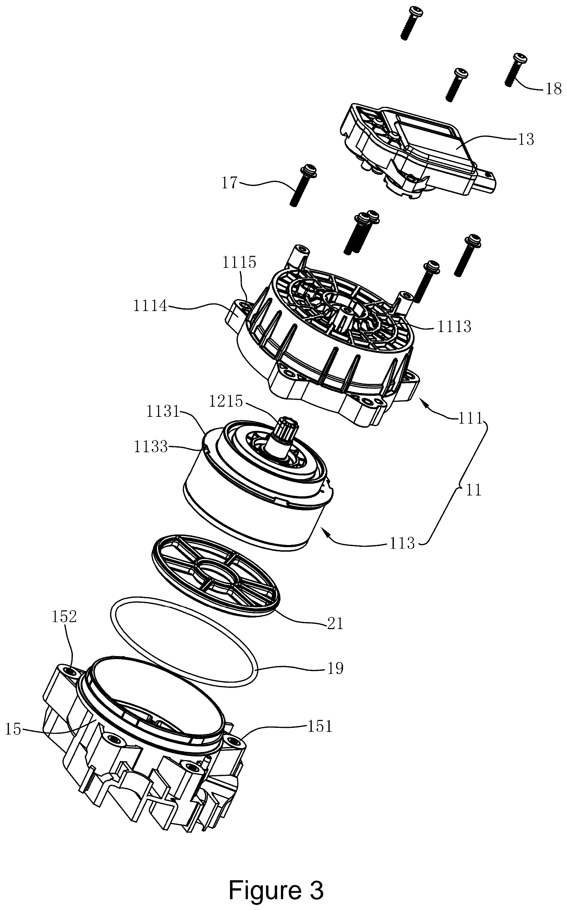

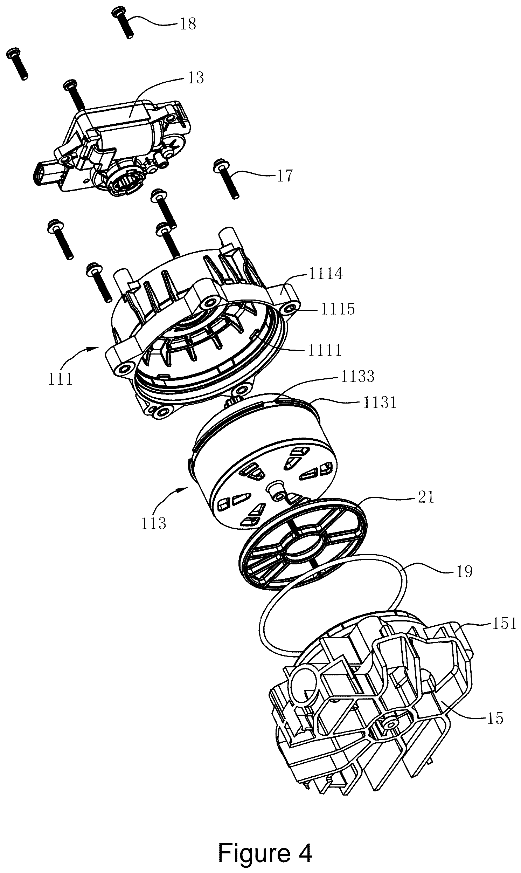

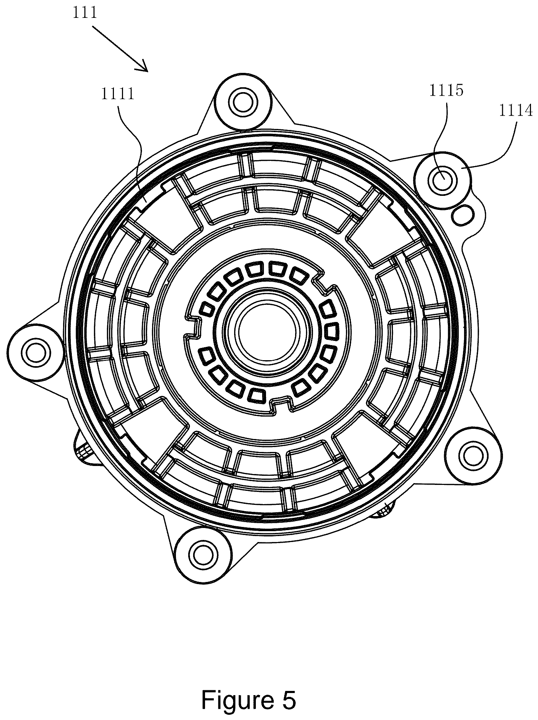

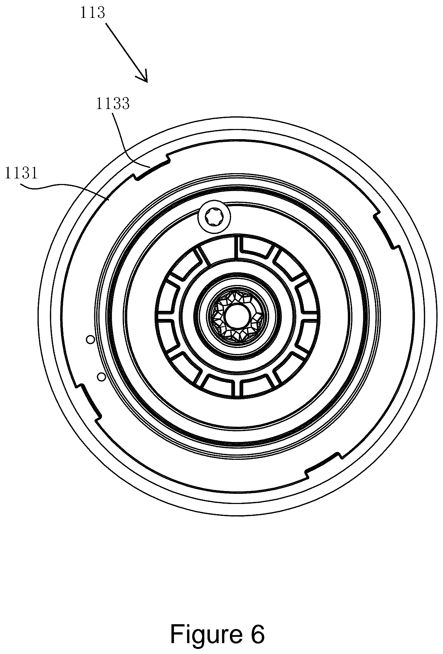

Referring to figures 1 and 2, a specific embodiment of present invention of a multi-way valve assembly includes a multi-way valve 11, an actuator 13, and a manifold 15 for automotive thermal management system. The multi-way valve 11 can be mounted onto the manifold 15. The actuator 13 is provided at the end of the multi-way valve 11 away from the manifold 15. The multi-way valve 11 includes a valve housing 111 and a valve core 113 at least partially disposed within the valve housing 111. The valve core 113 is rotatable relative to the valve housing 111 and defines a plurality of flow channels therein. The valve core 113 is rotated to enable the flow channels to be aligned and communicated with corresponding ports defined in the manifold 15, thereby providing different flow paths and enabling the thermal management system to operate in different modes. Referring also to figures 3 to 6, an axial end of the valve housing 111 is opened to allow the valve core 113 to enter the valve housing 111. A bayonet connection is provided between the valve housing 111 and the valve core 113 to prevent the valve core 113 from accidentally axially exiting the valve housing 111. In one embodiment, the valve housing 111 is provided with a first stop feature, and the valve core 113 is provided with a second stop feature. The second stop feature is located at the side of the first stop feature away from the open end of the valve housing 111 and configured to abut the first stop feature to form the bayonet connection.

In one embodiment of the multi-way valve assembly, the second stop feature and the first stop feature can abut against each other to prevent the valve housing and valve core from disengaging from the open end of the valve housing, thereby achieving self-locking between the valve housing and the valve core. In this way, a structure stability is maintained during assembly, improving assembly efficiency and reducing assembly cost. Moreover, when transporting the multi-way valve without being integrated the manifold, the structure stability is maintained for facilitating transport and improving transportation economy.

In this embodiment, the first stop feature is a plurality of lugs 1111, and the second stop feature is a flange 1131. The flange 1131 defines notches 1133 configured to allow the lugs 1111 to pass from one side of the flange 1131 to the other side. It can be understood that in another embodiment, the first stop feature may be a flange, and the second stop feature may be a plurality of lugs. Specifically, in this embodiment, both the lugs 1111 and the notches 1133 are four in number and are evenly spaced circumferentially. It can be understood that the lugs 1111 and notches 1133 may be one, two, three, four or more in number, and this is not limited herein.

In this embodiment, an end plate 1113 is provided at an end of the valve housing 111 away from the open end. The actuator 13 is connected to the end of the valve housing 111 provided with the end plate 1113. The second stop feature is located axially between the end plate 1113 and the first stop feature. The open end of the valve housing 111 is docked with the manifold 15, thereby enclosing the valve core 113 between the valve housing 111 and the manifold 15. Specifically, the valve core 113 is pushed by the manifold 15 toward the end plate 1113 of the valve housing 111 so that the second stop feature and the first stop feature are axially spaced apart.

In this embodiment, the valve housing assembly 111 is provided with first mounting tabs 1114, each defining a first mounting hole 1115. The manifold 15 is provided with a second mounting tab 151, each defining a second mounting hole 152. First fasteners 17 are respectively inserted into the first mounting holes 1115 and the corresponding second mounting hole 152 to fix the valve housing assembly 111 to the manifold 15. Specifically, the first mounting holes 1115 may be through-holes, and the second mounting holes 152 may be threaded holes. The first fastener 17 may be bolts, which passing through the first mounting holes 1115 and engaged with the corresponding second mounting hole 152. It can be understood that the valve housing 111 and the manifold 15 may also be integrated with each other by other connection methods, such as snap fitting.

In this embodiment, the valve housing 111 may also be secured with the actuator 13 by second fasteners 18. Specifically, the second fastener 18 may be a bolt. It can be understood that the valve housing 111 and the actuator 13 may also be integrated with each other by other connection methods, such as snap fitting.

In this embodiment, the multi-way valve assembly further includes a first sealing gasket 19 provided between the valve housing 111 and the manifold 15 to achieve sealing between the valve housing 111 and the manifold 15. Specifically, the manifolds 15 partially extends into the valve housing 111, the inner sidewall of the valve housing 111 and the outer sidewall of the manifold 15 are fitted together, and the first sealing gasket 19 abuts between the inner sidewall of the valve housing 111 and the outer sidewall of the manifold 15.

In this embodiment, the multi-way valve assembly further includes a second sealing gasket 21 provided between the valve core 113 and the manifold 15. Specifically, the second sealing gasket 21 is located between an end of the valve core 113 and the manifold 15. Specifically, the second sealing gasket 21 may be made of rubber. Specifically, the second sealing gasket 21 is generally circular and provided with a plurality of spokes; that is, the second sealing gasket 21 includes concentric inner and outer rings, with the inner and outer rings connected by the plurality of spaced, radially extending spokes.

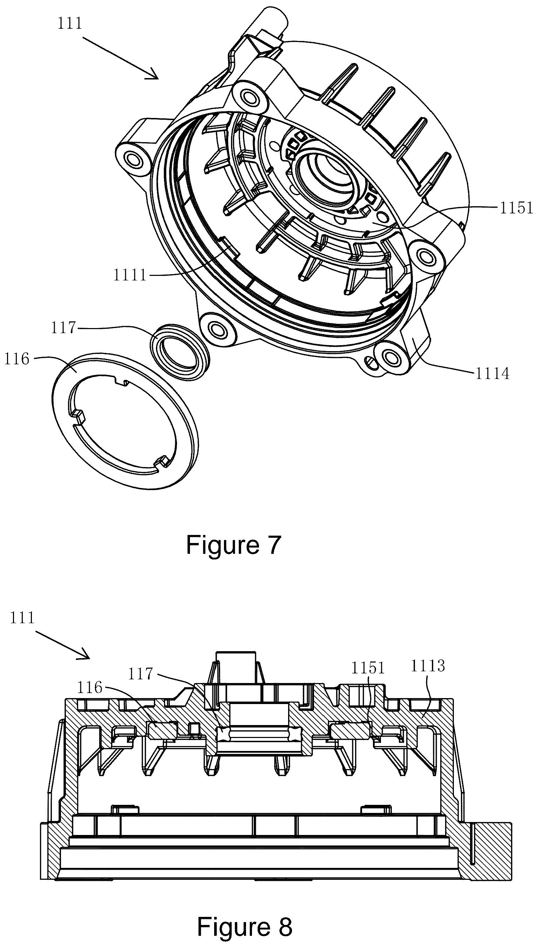

In this embodiment, as referring to Figures 7 and 8, a static sealing pad 116 and a seal ring 117 are provided within the valve housing 111. Both are attached to the end plate 1113. The static sealing pad 116 is used to abut the dynamic sealing pad 122 of the valve core 113 to form a dynamic sealing mechanism. The seal ring 117 is configured for sealing between the end plate 1113 and a rotation shaft 1215 of the valve core 113. When the valve core 113 rotates, the dynamic sealing pad 122 rotates relative to the static sealing pad 116, and the rotation shaft 1215 rotates relative to the end plate 1113.

Specifically, a recess 1151 is defined in the end plate 1113 of the valve housing, and the static sealing pad 116 is accommodated in the recess 1151 and fixed to the valve housing 111.

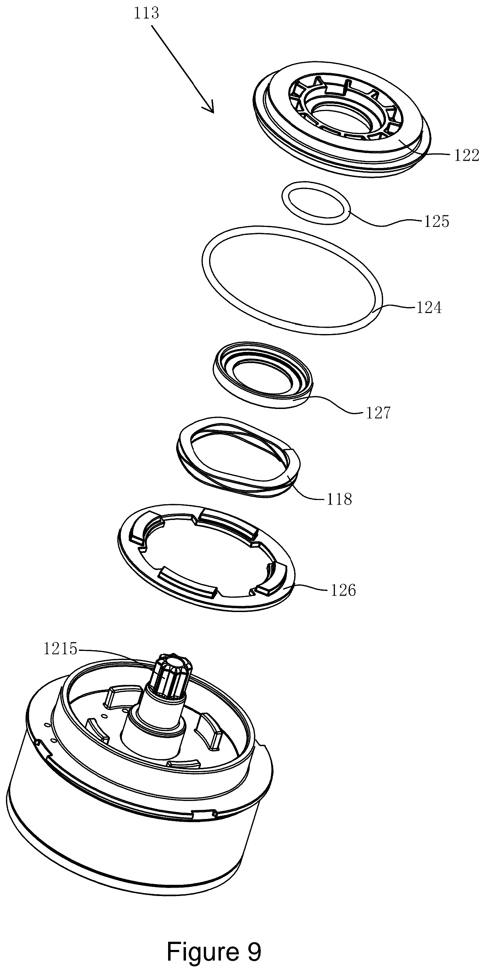

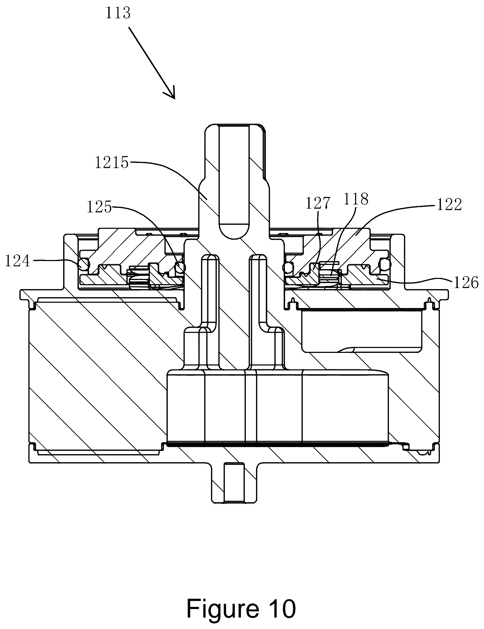

In this embodiment, as referring to Figures 9 and 10, the valve core 113 includes an elastic member 118, which applies an elastic force to the valve core 113 in a direction away from the end plate 1113 of the valve housing 111, thereby moving the flange 1131 of the valve core 113 toward the lug 1111. During assembly of the multi-way valve assembly, the lugs 1111 are aligned with the notches 1133, and then the valve core 113 is pushed so that the elastic member 118 is compressed and the lugs 1111 pass through the notches 1133. The valve core 113 is then rotated by a certain angle, and finally released. The elastic member 118 rebounds, causing the valve core 113 to move a certain distance in a direction away from the end plate 1113 until the lugs 1111 abutting against the flange (1131). Then the engagement between the lug 1111 and the flange 1131 causes the valve housing assembly 111 and the valve core 113 to be self-locked, thereby preventing them from disengaging from each other.

Specifically, the elastic member 118 can expand and contract between a first working length and a second working length. Specifically, the first working length can be 6 mm, and the second working length can be 7.5 mm. When the lugs 1111 are aligned with the notches 1133 and the valve core 113 is not pressed, the elastic member 118 is set at the second working length. When the valve core 113 is pressed and rotated, the elastic member 118 is set at the first working length. The elastic member 118 may be kept at a third working length between the first and second working lengths, corresponding to the lug 1111 are axially spaced apart from the flange 1131 by a certain distance under urging of the manifold 15. Specifically, the third working length can be 7 mm. After the valve core 113 is rotated by a certain angle and released, with the manifold 15 being connected to the valve housing 111 (i.e., after completion of assembly of the multi-way valve assembly), the elastic member 118 is kept at the third working length.

Specifically, the elastic member 118 may be a leaf spring. More specifically, in this embodiment the elastic member 118 is a multi-layer annular leaf spring. It can be understood that the elastic member 118 may also be a coil spring or the like.

In this embodiment, the dynamic sealing pad 122 is mounted to the axial end of the valve core 113 near the end plate 1113 of the valve housing 111. The elastic member 118 is disposed axially between the valve core 113 and the dynamic sealing pad 122. One side of the dynamic sealing pad 122 abuts the static sealing pad 116. When the elastic member 118 expands and contracts, the valve core 113 moves axially. It can be understood that the elastic member 118 may also be provided at other positions, as long as it can provide suitable elastic force.

Specifically, the rotation shaft 1215 extends from the end of the valve core 113 facing the end plate 1113. The rotation shaft 1215 passes through the dynamic sealing pad 122, the seal ring 117, and the end plate 1113 of the valve housing 111 to be engages with the output shaft of the actuator 13. The seal ring 117 provides sealing between the rotation shaft 1215 and the valve housing 111. The actuator 13 drives the rotation shaft 1215 to rotate and then actuating the valve core 113 to rotate. By manipulation of the actuator 13, the rotation angle of the valve core 113 is adjusted.

In this embodiment, the valve core 113 further includes a third sealing gasket 124 and a fourth sealing gasket 125. The third sealing gasket 124 is sleeved around the dynamic sealing pad 122, and the fourth sealing gasket 125 is dispensed between the rotation shaft 1215 and the dynamic sealing pad 122.

In this embodiment, the outer and inner sides of the elastic member 118 are respectively provided with a first collar 126 and a second collar 127. The first collar 126 is sleeved around the elastic member 118. The second collar 127 is sleeved around the rotation shaft 1215.

To assemble the multi-way valve assembly of this embodiment, the valve core 113 is first placed into the valve housing 111, with the notches 1133 correspondingly aligned to the lugs 1111. The valve core 113 is then pushed towards the end plate 1113 of the valve housing 111, with the lug 1111 passing through the notch 1133, and the elastic member 118 being compressed. After the valve core 113 is pushed a certain distance, the valve core 113 is rotated so that the lug 1111 and the notch 1133 are offset by a certain angle (for example, offset by 47.5°), causing the valve core 113 and the valve housing 111 to self-lock and preventing them from disengaging from each other. The valve core 113 is then released, and the elastic member 118 rebounds to urge the valve core 113 away from the end plate 1113. Next, the valve housing 111 is bolted to the manifold 15. During this process, the first sealing gasket 19 is placed between the manifold 15 and the valve housing 111, and the second sealing gasket 21 is placed between the manifold 15 and the valve core 113. Under the push of the manifold 15, the valve core 113 moves a certain distance toward the end plate 1113 of the valve housing 111 so that the lug 1111 and the flange 1131 are axially spaced apart by a certain distance in the multi-way valve assembly. In this way, assembly of the multi-way valve assembly is completed. After assembly, the elastic member 118 is kept at the third working length.

This application also provides a multi-way valve that can be integrated into a manifold 15 of an automotive thermal management system. The multi-way valve includes a valve housing 111 and a valve core 113 at least partially disposed within the valve housing 111, and rotatable relative to the valve housing 111. One axial end of the valve housing 111 is open to allow the valve core 113 to enter the valve housing 111. The valve housing 111 is provided with a first stop feature. The valve core 113 is provided with a second stop feature. The second stop feature is located at the side of the first stop feature away from the open end of the valve housing 111 and configured to abut the first stop feature to prevent disengagement of the valve housing 111 and valve core 113 via the open end.

In this embodiment, the first stop feature is a plurality of lugs 1111, and the second stop feature is a flange 1131. The flange 1131 defines notches 1133 configured to allow the lugs 1111 to pass from one side of the flange 1131 to the other. It can be understood that in another embodiment, the first stop feature may be a flange, and the second stop feature may be a plurality of lugs. Specifically, in this embodiment, both the lugs 1111 and the notches 1133 are four in number and are evenly spaced circumferentially. It can be understood that the lugs 1111 and notches 1133 may be one, two, three, four or more in number, and this is not limited herein.

In this embodiment, an end plate 1113 is provided at the end of the valve housing 111 away from the open end. The second stop feature is axially located between the end plate 1113 and the first stop feature.

In this embodiment, the valve core 113 includes an elastic member 118, which applies an elastic force to the valve core 113 in a direction away from the end plate 1113 of the valve housing 111. Specifically, the elastic member 118 can urge the valve core 113 to cause the second stop feature and the first stop feature to axially abut each other.

The structures of the valve housing 111 and valve core 113 in this embodiment is the same as aforementioned.

This disclosure further provides a thermal management system comprising the above multi-way valve assembly. Specifically, the thermal management system may include one, two, or more multi-way valve assemblies, set according to the requirements of channel connections.

Although certain inventive embodiments of the present disclosure have been specifically described, the present disclosure is not to be construed as being limited thereto. Various changes or modifications may be made to the present disclosure without departing from the scope and spirit of the present disclosure.

## Claims

1. A multi-way valve configured to be mounted onto a manifold (15) of an automotive thermal management system, comprising a valve housing (111) and a valve core (113) at least partially disposed within the valve housing (111), the valve core (113) being rotatable relative to the valve housing (111); an axial end of the valve housing (111) being opened to allow the valve core (113) to enter the valve housing (111); wherein the multi-way valve further comprises a bayonet connection between the valve housing (111) and the valve core (113) to prevent the valve core (113) from axially exiting the valve housing (111).

2. The multi-way valve of claim 1, wherein the valve housing (111) is provided with a first stop feature, and the valve core (113) is provided with a second stop feature (1111), the second stop feature (1131) being located on the side of the first stop feature away from the open end of the valve housing (111), and configured to abut the first stop feature to form the bayonet connection.

3. The multi-way valve of claim 2, wherein one of the first stop feature and the second stop feature is a plurality of lugs (1111), and the other is a flange (1131); the flange (1131) defines notches (1133) configured to allow the lug (1111) to pass from one side of the flange (1131) to the other side.

4. The multi-way valve of claim 2, wherein an end plate (1113) is provided at an end of the valve housing (111) away from the open end, and the second stop feature is located axially between the end plate (1113) and the first stop feature.

5. The multi-way valve of claim 4, wherein the valve core (113) comprises an elastic member (118), the elastic member (118) applying an axial elastic force to the valve core (113) in a direction away from the end plate (1113) of the valve housing (111).

6. The multi-way valve of claim 5, wherein the second stop feature and the first stop feature axially abuts against each other under an elastic force of the elastic member (118) in response to the valve housing (111) detached from the manifold (15).

7. The multi-way valve of claim 6, wherein a static sealing pad (116) is provided within the valve housing (111), and attached to the end plate (1113); a dynamic sealing pad (122) is attached to an end of the valve core (113) facing the end plate (1113) of the valve housing (111); the elastic member (118) is disposed axially between the valve core (113) and the dynamic sealing pad (122), and a side of the dynamic sealing pad (122) away from the valve core (113) abuts the static sealing pad (116).

8. The multi-way valve of claim 7, wherein a seal ring (117) is also provided within the valve housing (111), near the end plate (1113); a rotation shaft (1215) extends from an end of the valve core (113) facing the end plate (1113), the rotation shaft (1215) extends through the dynamic sealing pad (122), the seal ring (117), and the end plate (1113) of the valve housing (111) to be engages with an actuator (13).

9. The multi-way valve of claim 8, wherein the elastic member (118) is an annular leaf spring with outer and inner sides of the elastic member (118) respectively provided with a first collar (126) and a second collar (127), the first collar (126) being sleeved around the elastic member (118), and the second collar (127) being mounted inside the elastic member (118) and sleeved around the rotation shaft (1215).

10. A multi-way valve assembly comprising the multi-way valves of any one of claims 1-9, an actuator (13), and a manifold (15), the actuator (13) being provided at an end of the multi-way valve away from the manifold (15).

11. The multi-way valve assembly of claim 10, wherein the valve core is urged by the manifold (15) toward the end plate (1113) of the valve housing (111) so that the second stop feature and the first stop feature are axially spaced apart.

12. The multi-way valve assembly of claim 10, further comprising a first sealing gasket (19) and a second sealing gasket (21), the first sealing gasket (19) being provided between the valve housing (111) and the manifold (15), and the second sealing gasket (21) being sandwiched between the valve core (113) and the manifold (15).

13. A thermal management system, comprising any of the multi-way valve assemblies of claims 10-12.
